(19) Europäisches Patentamt
European Patent Office
Office européen des brevets

(11) **EP 2 088 486 B1**

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(51) Int Cl.:
**G05B 17/02** *(2006.01)* **G05B 19/401** *(2006.01)*

(21) Anmeldenummer: **09151079.2**

(22) Anmeldetag: **22.01.2009**

(54) **Verfahren zur Vermessung eines nichtlinearen dynamischen realen Systems mittels Versuchsplanung**

Method for measuring a non-linear dynamic real system using design of experiment

Procédé de mesure d'un système réel dynamique non linéaire selon un plan d'expériences

(84) Benannte Vertragsstaaten:
**DE FR GB IT**

(30) Priorität: **07.02.2008 AT 712008 U**

(43) Veröffentlichungstag der Anmeldung:
**12.08.2009 Patentblatt 2009/33**

(73) Patentinhaber: **AVL List GmbH**
**8020 Graz (AT)**

(72) Erfinder:
• **Keuth, Nikolaus**
**8010 Graz (AT)**
• **Ebner, Thomas**
**8010,Graz (AT)**
• **Pflügl, Horst**
**8502 Lannach (AT)**

(74) Vertreter: **Laminger, Norbert**
**Pinter, Laminger & Weiss OG**
**Patentanwälte**
**Prinz-Eugen-Strasse 70**
**1040 Wien (AT)**

(56) Entgegenhaltungen:
**WO-A2-03/075169 WO-A2-03/087957**

• **AYEB M ET AL: "Robust Identification of Nonlinear Dynamic Systems Using Design of Experiment" INTELLIGENT CONTROL, 2006. IEEE INTERNATIONAL SYMPOSIUM ON, IEEE, PI, 4. Oktober 2006 (2006-10-04), Seiten 2321-2326, XP031388484 ISBN: 978-0-7803-9798-9**

• **PRONZATO ET AL: "Optimal experimental design and some related control problems" AUTOMATICA, PERGAMON, Bd. 44, Nr. 2, 11. Januar 2008 (2008-01-11), Seiten 303-325, XP022418746 ISSN: 0005-1098**
• **HANS BANDEMER ET AL.: "Optimale Versuchsplanung" 1976, VERLAG HARRI DEUTSCH (DEUTSCH TASCHENBÜCHER NR. 23) , ZÜRICH, FRANKFURT AM MAIN, THUN , XP002527619 pages 46-67 * Seite 46 * * Seiten 63-67 ***
• **AYEB M ET AL: "Kapitel 6.2. Integration der D-Optimalität in neuronale Modellierungsverfahren" DESIGN OF EXPERIMENTS (DOE) IN DER MOTORENENTWICKLUNG : PRAKTISCHE ANWENDUNGEN IN DER AUTOMOBIL- UND ZULIEFERERINDUSTRIE, EXPERT VERLAG, GERMANY, 1. Januar 2003 (2003-01-01), Seiten 185-194, XP009116954 ISBN: 978-3-8169-2271-1**
• **BITTERMANN A ET AL: "Emissionsauslegung des dieselmotorischen Fahrzeugantriebs mittels DoE und Simulationsrechnung" MTZ MOTORTECHNISCHE ZEITSCHRIFT, VIEWEG VERLAG, WIESBADEN, DE, Bd. 65, Nr. 6, 1. Juni 2004 (2004-06-01), Seiten 466-474, XP001519192 ISSN: 0024-8525**
• **VAN BEERS ET AL: "Customized sequential designs for random simulation experiments: Kriging metamodeling and bootstrapping" EUROPEAN JOURNAL OF OPERATIONAL RESEARCH, AMSTERDAM, NL, Bd. 186, Nr. 3, 31. Oktober 2007 (2007-10-31), Seiten 1099-1113, XP022323264 ISSN: 0377-2217**

EP 2 088 486 B1

**Beschreibung**

Die Erfindung betrifft ein Verfahren zur Vermessung eines nichtlinearen dynamischen realen Systems, beispielsweise einer Verbrennungskraftmaschine, eines Antriebsstranges oder eines Teilsystems davon, im Rahmen der Erstellung eines globalen Modells zumindest einer Ausgangsgröße des Systems für den gesamten Zustandsraum aller durch die Menge von Systemparametern definierten Betriebspunkte des Systems, umfassend die Vermessung des Systems für eine Teilmenge von Betriebspunkten, welche durch eine Menge von Systemparametern definiert sind.

Im Automotive Bereich wächst der Bedarf an effizienten und genauen Modellen immer mehr, da die Bedatung der Motorsteuerung immer komplexer und aufgrund der strenger werdenden gesetzlichen Bestimmungen, immer aufwändiger werden. Als Voraussetzung für gute Modelle sind vor allem gute Messwerte und ein gut gewählter Messplan Vorraussetzung. Dadurch wächst die Anzahl der notwendigen Messungen und damit auch die Messzeit. Da Prüfstandszeit jedoch sehr teuer ist, entsteht die Anforderung nach effektiven Versuchsplänen, welche die Messpunkteanzahl minimieren, den Versuchsraum möglichst gut abdecken und dabei die mit diesen Daten trainierten Modelle qualitativ zu optimieren. Mit diesen Modellen werden anschließend ECU-Strukturen optimiert und kalibriert oder auch Bauteilentscheidungen getroffen.

Heute werden ausgehend von lokalen Versuchsplänen, welche an vorherbestimmten Last- und Drehzahlpunkten erstellt werden, lokale Modelle gebildet und in weiterer Folge lokal optimiert, wie beispielsweise in A. Bittermann, E. Kranawetter, J. Krenn, B. Ladein, T. Ebner, H. Altenstrasser, H.M. Koegeler, K. Gschweitl: Emissionsauslegung des dieselmotorischen Fahrzeugantriebs mittels DoE- und Simulationsrechnung; MTZ Jahrgang 65/6 (2004), beschrieben ist. Die Last- Drehzahlpunkte werden meistens aufgrund ihrer Häufigkeit im ECE+EUDC oder anderen Fahrzyklen ausgewählt oder rasterförmig angeordnet. Dies hat den Nachteil, dass entweder der Versuchsraum in der Last\Drehzahl -Ebene zu schlecht für ein globales Modell - in dem alle Systemparameter als Modelleingangsgrößen dienen - abgedeckt ist, oder aber zu viele Punkte gemessen werden müssen, was die Kosten enorm ansteigen lässt. Da vor allem die Abgase besonders stark von Last und Drehzahl und nur in geringerem Masse von den weiteren Systemparametern, wie z.B. Abgasrückführrate oder Zündwinkel, abhängig sind, ist es notwendig globale Modelle bilden zu können. Daraus ergibt sich die Anforderung einen Design-Algorithmus zu entwickeln, welcher diese Problematik besonders berücksichtigt.

In der Literatur findet man vor allem mathematische Standardmethoden, welche aus der Chemischen Industrie stammen. Generell kann man diese Algorithmen in zwei Gruppen einteilen. Die eine Gruppe von Designs kann analytisch berechnet werden (CCD, BoxBenken, faktorielle Designs). Beispiele dafür sind in D. Montgomery, Design and Analysis of Experiments (5th Ed.) (2001) , John Wiley & Sons, Inc, oder in W. Kleppmann: Taschenbuch der Versuchplanung (3rd. Ed.) (2003), Hanser Verlag, zu finden. Die zweite Gruppe wird numerisch durch Optimierungsalgorithmen erstellt, wie etwa in T. Santner, B.Willimans, W. Notz: The Design and Analysis of Computer Experiments, (2003) Springer New York, erläutert wird.

Aktuelle Entwicklungen gehen in Richtung iterativer, modellstrukturbasierter Versuchsplanungsmethoden, welche in jedem Iterationsschritt weitere Designpunkte für alle Systemparameter auf einmal, basierend auf Messdaten des vorhergehenden Iterationsschrittes, berechnen. Beispiele dafür sind zu finden in: AYEB M ET AL: "Robust Identification of Nonlinear Dynamic Systems Using Design of Experiment" INTELLIGENT CONTROL, 2006. IEEE INTERNATIONAL SYMPOSIUM ON, IEEE, PI, 4. Oktober 2006 (2006-10-04), Seiten 2321-2326,; PRONZATO ET AL: "Optimal experimental design and some related control problems" AUTOMATICA, PERGAMON, Bd. 44, Nr. 2, 11. Januar 2008 (2008-01-11), Seiten 303-325; HANS BANDEMER ET AL.: "Optimale Versuchsplanung" 1976, VERLAG HARRI DEUTSCH (DEUTSCH TASCHENBÜCHER NR.23), ZÜRICH, FRANKFURT AM MAIN, THUN , und AYEB M ET AL: "Kapitel 6.2. Integration der D-Optimalität in neuronale Modellierungsverfahren" DESIGN OF EXPERIMENTS (DOE) IN DER MOTORENENTWICKLUNG : PRAKTISCHE ANWENDUNGEN IN DER AUTOMOBIL- UND ZULIEFERERINDUSTRIE, EXPERT VERLAG, GERMANY, 1. Januar 2003 (2003-01-01), Seiten 185-194.

Ein weiterer, in der WO03/087957 A geoffenbarter Ansatz behandelt eine iterative Versuchsplanung in Abhängigkeit der gemessenen Versuchsraumgrenzen, ebenfalls als Erweiterung der Designpunkte für alle Systemparameter auf einmal.

Das hier vorgestellte Verfahren hat die Aufgabe Versuchspläne zu generieren, welche auf die typischen Anwendungen in der Motoren bzw. Getriebeentwicklung und Bedatung der ECU bzw. TCU abgestimmt sind und für diese Zwecke eine optimale Vermessung und Modellerstellung des realen Systems unter Beachtung der Versuchgrenzen und weiterer vorgegebener Kriterien erlauben.

Zur Lösung dieser Aufgabe ist das eingangs beschriebene Verfahren durch die in den Patentansprüchen dargelegten Merkmale gekennzeichnet . In der zweiten Stufe kommen jene Systemparameter hinzu, die nach Vorwissen oder Einschätzung den nächst-niedrigeren Einfluss auf die Ausgangsgröße(n) des Systems haben. Damit ist auf Basis eines globalen Versuchsplanes die zeitsparende globale Vermessung mit anschließender Modellbildung und Optimierung beliebiger nichtlinearer dynamischer realer Systeme möglich.

Dabei ist vorgesehen ist vorgesehen, dass die erste Teilmenge auf Basis der die Haupteinflussgrößen auf die Ausgangsgröße des Systems beschreibenden Parameter ausgewählt wird. Damit ist sichergestellt, dass die Designpunkte der ersten Stufe auf den Haupteinflussgrößen basieren, also jener Teilmenge von Systemparametern mit dem größten Einfluss auf die Ausgangsgröße des Systems. Diese Versuchsplanerstellung ermöglicht somit eine getrennte Beeinflussung der Verteilung der Designpunkte, der Abdeckung und der Begrenzung des Betriebsbereiches des realen Systems in jeder Stufe, aufbauend auf der vorhergehenden Stufe. zudem wird die zweite Teilmenge auf Basis der Nebeneinflussgrößen auf die Ausgangsgröße des Systems beschreibenden Parameter ausgewählt. Über die Berücksichtigung der Nebeneinflussgrößen, also jener Systemparameter mit dem gegenüber der Haupteinflussgrößen nächst-niedrigeren Einfluss auf die Ausgangsgröße des Systems, kann die für die Modellbildung notwendige Anzahl von Systempunkten erreicht werden, wobei diese Anzahl aber im Sinn einer zeitsparenden Vermessung des realen Systems möglichst gering gehalten wird.

Wenn gemäß einer weiteren Ausführungsform der Erfindung die Teilmengen der Parameter der beiden der beiden Stufen einander nicht schneiden, kann bei geringer Anzahl von zu vermessenden Designpunkten der ersten Stufe dennoch eine gute Abdeckung des gesamten Versuchsraumes über alle Systemparameter gewährleistet werden.

Entsprechend einer speziellen Ausführungsform kann jede Teilmenge gemäß einem globalen Testdesign ausgewählt werden, so dass in jeder Stufe die Auswahl der Designpunkte unter Berücksichtigung aller bis dahin ausgewählter Systemparameter gemäß einem globalen Testdesignverfahren durchgeführt werden kann.

Vorzugsweise ist dabei vorgesehen, dass für zumindest die erste Teilmenge ein den Zustandsraum gleichmäßig füllendes Testdesign zum Einsatz kommt. So entsteht für zumindest die erste Stufe ein den über die erste Teilmenge von Systemparametern aufgespannten Versuchsraum gleichmäßig füllendes Testdesign.

Die Automatisierung des erfindungsgemäßen Verfahrens kann zu einem hohen Grad erreicht werden, wenn über eine Sensitivitätsanalyse die die Haupteinflussgrößen beschreibenden Systemparameter automatisch ermittelt werden.

Eine weitere Erhöhung des Automatisierungsgrades ist erreichbar, wenn die Gruppierung der Systemparameter für die einzelnen Stufen automatisch vorgenommen wird, beispielsweise über eine Clusteranalyse.

In der nachfolgenden Beschreibung soll die Erfindung anhand der beigefügten Zeichnungen näher erläutert werden.

Dabei zeigt die Fig. 1 die grundlegende Generierung eines Kandidatensets, Fig. 2 zeigt die Auswahl der Zelle mit dem größten minimalen Abstand, Fig. 3 ist eine Darstellung von einer Verschiebung von Punkten außerhalb des prinzipiell möglichen Bereiches, und Fig.

4 zeigt den Versuchsraum mit Punkten gemäß einem S-Optimalen Design, mit Streichung von Projektionslinien.

Das erfindungsgemäße Verfahren wurde zur Erstellung von globalen Versuchsplänen für zeitsparende Vermessungen realer Systeme, beispielsweise Verbrennungskraftmaschinen, Antriebsstränge oder Teilsysteme davon, insbesondere für den Prüfstandsbetrieb, entwickelt und abgestimmt auf das Training von neuronale Netzen. Dabei sollen vor allem die hohe Dimensionalität der Systeme und damit auch Versuchsräume und beliebige Begrenzungen des Versuchsraums berücksichtigt werden. Nachfolgend wird beispielhaft für beliebige reale Systeme immer wieder auf Verbrennungsmotoren mit den Haupteinflussgrößen Last und Drehzahl Bezug genommen.

Kombiniert werden unterschiedliche Testdesignverfahren in den jeweiligen Stufen, die einerseits den Vorteil haben, den Versuchsraum in Gebieten, in denen kein Wissen über die Beschaffenheit der abzubildenden Nichtlinearität besteht, gut abzudecken und andererseits die Möglichkeit bieten das Design an eine gewisse zu erwartende Modellordnung anzupassen. Der erzeugte Versuchsplan eignet sich vor allem für globale stationäre Modelle auf Basis von Neuronalen Netzwerken, wie sie in der AT 7.710 U2 geoffenbart sind. Die Daten für die Modellierung werden mit geeigneter Software, z.B. mit der von AVL List GmbH entwickelten Software CAMEO, auf einem Prüfstand aufgenommen.

Die Designerstellung für die Vermessung und Modellerstellung erfolgt in zumindest drei Schritten:

Schritt 1 oder PreProzessing: Hier werden die Systemparameter bestimmt, welche den größten Einfluss auf die zu vermessenden Größen haben. Dabei kann der Anwender alle zu verstellende Größen oder nur ein Subset zur Bestimmung der Abhängigkeiten heranziehen. Die Untersuchung geschieht auf Basis einer Ausgangsgröße, welche in späterer Folge zur Modellierung herangezogen wird. Werden mehrere Ausgangsgrößen angegeben, wird die Untersuchung für jede Ausgangsgröße durchgeführt und die Ergebnisse abschließend kombiniert.

Schritt 2: Ein erstes Design für die Haupteinflussgrößen, beispielsweise bei Verbrennungsmotoren für Last und Drehzahl, wird erstellt (Stufe 1). Die Annahme ist, dass die Ausgangsgrößen des Systems am stärksten von Last und Drehzahl abhängen und die Modellordnung im Allgemeinen nicht bekannt ist.

Schritt 3 und folgende: Nun wird mit den in Schritt 2 ausgewählten Drehzahl/Last-Betriebspunkten ein globales Design mit einem globalen Testdesignverfahren erstellt (Stufe 2 und folgende), welches über den Versuchsraum, aufgespannt über die Teilmenge der Systemparameter dieser Stufe optimiert wird.

Vorteil dieses Ansatzes ist, dass man erstens genau die Anzahl der Drehzahl/Last-Betriebspunkte spezifizieren kann und zweitens der Last/Drehzahl Bereich möglichst gut mit Messpunkten abgedeckt wird, sodass eine unbekannte Nichtlinearität bei der anschließenden Modellbildung erfasst werden kann. Da lokal (in einem einzelnen Drehzahl/Last-Betriebspunkt) die benötigte Modellordnung bzw. die Zusammenhänge zwischen den Systemparametern und der Ausgangsgrößen des Systems recht genau bekannt sind, ist es möglich im zweiten Schritt global auf diese Modellordnung hin zu optimieren. Sollten diese Zusammenhänge nicht bekannt sein, kann im zweiten Schritt der Versuchsraum ebenfalls durch einen Spacefilling-Versuchsplan gut abgedeckt werden

Im Schritt 1 (PreProzessing) werden die Systemparameter in zwei oder mehr Teilgruppen unterteilt. Diese Teilgruppen unterscheiden sich durch ihren Einfluss auf die zu messenden Ausgangsgrößen. Dazu wird die Methodik der Sensitivitätsanalyse verwendet wie sie in Chiang C.J. and A.G. Stefanopoulou: Sensitivity Analysis of Combustion Timing and Duration of Homogeneous Charge Compression Ignition (HCCI) Engines, Proceedings of ACC 2006, Minneapolis June 2006, oder in Karsten Röpke, et al.: Design of Experiments in Engine Developement III, Expert Verlag, Berlin, 2007, beschrieben wird.

Dazu wird zuerst ein sternförmiges Design of Experiments ausgehend von einem sicheren Startpunkt in allen Systemparameterrichtungen abgefahren. Dabei wird pro Punkt nur ein Systemparameter variiert. Bei jedem Versuchspunkt wird eine schnelle Aktualwertmessung der interessierenden Ausgangsgrößen gemacht, dadurch wird die Versuchsdauer möglichst kurz gehalten.

Ein gängiger Ansatz zur Bestimmung der Sensitivität ist die Normierung der Daten auf das Intervall zwischen 0 und 1, wie auch bereits in T. Santner, B.Willimans, W. Notz: The Design and Analysis of Computer Experiments, (2003) Springer New York, beschrieben wird. Danach werden über eine lineare Regression die einzelnen Regressionskoeffizienten $\beta_i$ bestimmt. Danach wird mittels t-Test die Signifikanz der einzelnen Koeffizienten ermittelt.

Um die Hypothese $\beta_i = 0$ zu testen wird der so genannte Z-Score berechnet: $z_i = \dfrac{\hat{\beta}_i}{\hat{\sigma}\sqrt{v_i}}$ wobei

$v_i$ dem j-ten Diagonalelement in $(\mathbf{X}^T\mathbf{X})^{-1}$ entspricht.

$z_i$ ist dann unter der Annahme der Nullhypothese t-verteilt mit N-p-1 Freiheitsgraden. Näheres dazu kann in T. Hastie, R. Tibishirani, J. Friedman, The Elements of Statistical Learning: Data Mining, Inference, and Prediction, Springer, Corr. 3rd printing edition (July 30, 2003), gefunden werden.

Je größer der Wert von $z_i$ desto größer ist die Auswirkung des entsprechenden Systemparameters auf den Ausgang. Zusätzlich kann auch gemäß T. Santner, B.Willimans, W. Notz: The Design and Analysis of Computer Experiments, (2003) Springer New York, die Sensitivität der einzelnen Eingänge auf den Ausgang bestimmt werden.

Anhand eines vom Anwender angegebenen Signifikanzniveaus können in weiterer Folge die Systemparameter in zwei Gruppen unterteilt werden. Die erste Gruppe der Systemparameter wird nun im nachfolgenden zweiten Schritt der Versuchsplanung verwendet. Die restlichen Systemparameter gehen dann in den dritten Schritt bzw. weitere Schritte ein. Bei Verbrennungsund Dieselmotoren besteht die erste Gruppe meistens aus den Systemparametern Last und Drehzahl.

Bei Schritt 2, der Erstellung eines Versuchsplanes für Last/Drehzahl, wird vorzugsweise zwischen zwei Arten von Testdesignverfahren ausgewählt, nämlich entsprechende dem LHS (Latin Hypercube Spacefilling) - Design oder dem S-Optimal (Space-Optimal) - Design. Beide Designs nehmen auf die Begrenzungen für die Haupteinflussgrößen, hier in Last/Drehzahlrichtung, Rücksicht. Dies wird beim S-Optimal Design über die Kandidatenliste erreicht, beim LHS-Design werden hingegen nachträglich Punkte verschoben.

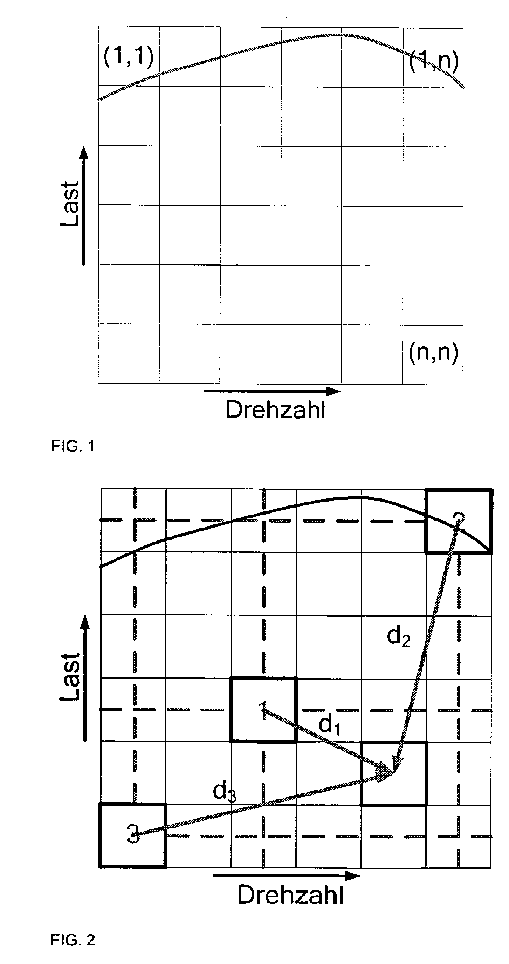

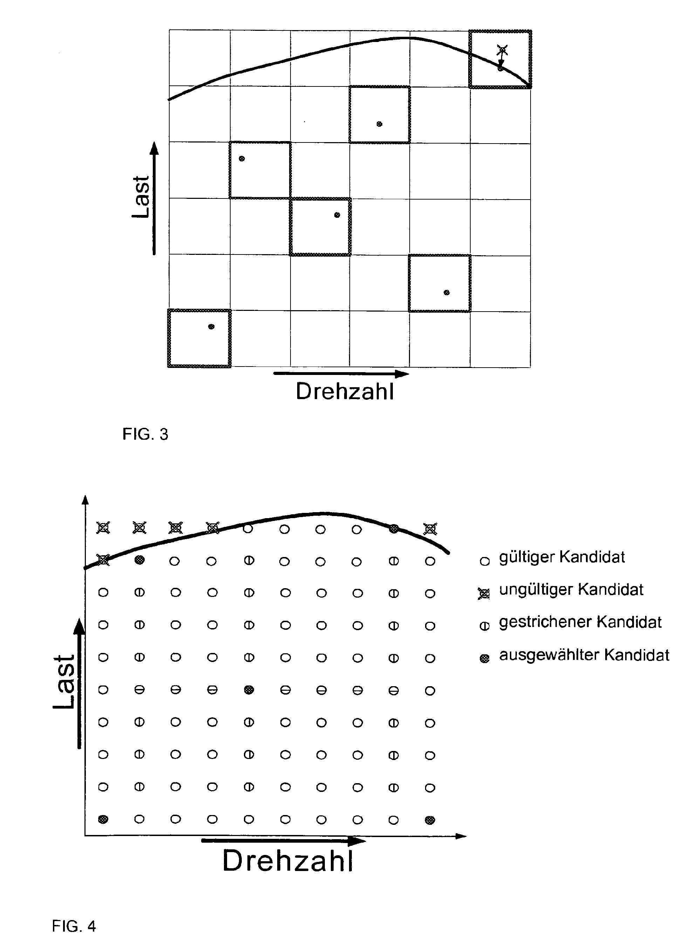

Bei Anwendung des LHS-Design werden nach Vorgabe durch den User n Punkte im Versuchsraum verteilt. Das Design wird bei der Erstellung hinsichtlich des Abstands der Punkte zueinander optimiert. Dabei wird versucht die Punkte so zulegen, dass der minimale Abstand aller Punkte im Design maximal ist. Dabei wird so vorgegangen, dass der Versuchsraum wie in Fig. 1 dargestellt ist in n x n Quadrate unterteilt wird. Jedes dieser Quadrate erhält ein Koordinatenpaar (1,1), (1,2) ..... (1,n) .....(n,n). Damit erhält man ein Kandidatenset. Als Startpunkt für die Optimierung wird die Zelle in der Mitte ausgewählt. Nun werden alle Zellen aus der Kandidatenliste entfernt, welche auf den Projektionen der Zelle auf die Achsen liegen. Damit wird erreicht, dass beim endgültigen Design die Punkte in jeder Richtung gleichverteilt sind. Die nächste Zelle die hinzugenommen wird ist jene, die die maximale Distanz zur ersten Zelle besitzt. Die Distanz zwischen Zellen I und m lässt sich über folgende Formel berechen: d=sqrt((xl1 - xm1)2 +(xl2 - xm2)2). Ist die Zelle mit der maximalen minimalen Distanz (siehe Fig. 2) zum Design gefunden, wird ihre Koordinate zur Designliste hinzugefügt und alle Punkte auf den Projektionen entfernt. Nachdem n Zellen auf diese Art und Weise ausgewählt wurden, wird in jeder Zelle ein Zufallspunkt gewählt. Zur Überprüfung der Begrenzungen, werden diese Punkte nun auf ein vorgegebenes Begrenzungs-Kandidatenset abgebildet. Damit ist gewährleistet, dass das Design nur fahrbare und einstellbare Last/Drehzahlpunkte enthält. Punkte außerhalb der Begrenzungen werden aus dem Plan gestrichen. Um wieder auf die gewünschten n Drehzahl/Last-Betriebspunkte zu kommen, werden dem Versuchsplan nun noch Punkte aus dem Kandidatenset hinzugefügt, welche im fahrbaren Bereich liegen, wie aus Fig. 3 hervorgeht. Hierzu wird die minimale Distanz aller Kandidaten zum Design berechnet und jener Kandidat hinzugefügt, welcher die maximale minimale Distanz zum Design besitzt. Dieser Schritt wird solange wiederholt bis das Design aus n Punkten besteht. Damit erhält man im krummlinig begrenzten Raum ein LHS ähnliches Design mit n Punkten. Diese Last/Drehzahl - Betriebspunkte werden in der zweiten Stufe zur Erstellung des globalen Versuchsplans der nächsten Stufe verwendet.

Für das S-Optimale Design wird ein Kandidatenset in Form eines Rasters verwendet, aus welchem Punkte außerhalb des fahrbaren Bereiches entfernt wurden. Als Startwert, wird jener Rasterpunkt ausgewählt, welcher dem Zentrum am nächsten ist. Dann werden jene Punkte aus dem Kandidatenset zum Design hinzugefügt, welche die maximale minimale Distanz zum aktuellen Design besitzen. Um zu vermeiden, dass das Design wiederum ein Raster bildet bei dem viele Punkte auf der selben Projektionslinie liegen, werden Punkte auf den Projektionslinien von bereits im Design befindlichen Punkten aus dem Kandidatenset entfernt. Allerdings nur dann, wenn der Punkt, welcher gerade zum Design hinzugefügt wurde, sich nicht an der Grenze des Betriebsbereiches befindet, wie in Fig. 4 dargestellt ist. Durch diese Maßnahme sollen zwei Effekte erreicht werden, nämlich eine möglichst gute Abdeckung der Grenzen sowie eine Gleichverteilung der Punkte über den Messbereich.

Um einerseits dem Benutzer die Möglichkeit zu gegeben bestimmte Betriebspunkte dem Design hinzuzufügen, und andererseits unterschiedliche Punktedichte in unterschiedlichen Bereichen zu erreichen, ist es notwendig in beiden Algorithmen Inclusions zu ermöglichen. Dies kann in beiden Fällen durch unterschiedliche Ansätze erreicht werden.

Sollen beim LHS-Design d - Punkte als Inclusions verwendet werden und zusätzlich n - Punkte dem Versuchsplan hinzugefügt werden, wird der Betriebsbereich in (n+d) x (n+d) Zellen unterteilt. Anschließend werden jene Zellen gesucht in denen die Inclusions zu liegen kommen und diese aus dem Kandidatenset entfernt. Außerdem werden alle Zellen, welche auf den Projektionen auf die Achsen liegen auch entfernt. Danach wird mit dem eigentlichen erstellen des Versuchsplans begonnen. Es wird wiederum jene Zelle ausgewählt, die zu den Zellen in welchen die Inclusions liegen, die maximale minimale Distanz besitzt. Ab hier läuft der Algorithmus so wie oben beschrieben.

Beim S-Optimal Design ist es noch einfacher Inclusions zu integrieren. Hier wird das Design nicht von einem initialen Kandidaten begonnen, sondern es wird jener Kandidat gesucht, welcher die maximale minimale Distanz zu den Inclusions besitzt. Dann wird die Versuchplanerstellung so weiter geführt wie oben beschrieben.

In den nächsten Schritten 3 - n wird nun der Versuchsplan global optimiert, wobei vorteilhafterweise zwei Varianten angewendet wurden, nämlich ein globales S-Optimales Design oder ein globales D-Optimales Design. In beiden Varianten wird ein Kandidatensatz verwendet, welcher auf den Drehzahl/Last - Betriebspunkten basiert, die in den vorhergehenden Schritten ausgewählt wurden.

Während der Optimierung des Versuchsplans werden vom Benutzer definierbare Vorgaben berücksichtigt: die minimale Anzahl von Designpunkten pro Drehzahl/Last - Betriebspunkt, die Standardabweichung von Designpunkten pro Drehzahl/Last - Betriebspunkt und die maximale Anzahl von Designpunkten pro Drehzahl/Last - Betriebspunkt. Dadurch soll erreicht werden, dass in jedem Drehzahl/Last - Betriebspunkt zumindest ein Messpunkt liegt, d.h. Betriebspunkte können im globalen Versuchsplan mit allen Systemparametern nicht verloren gehen. Durch die Bedingung mit der Standardabweichung wird erreicht, dass der ganze Versuchsraum mit Messpunkten gefüllt ist und damit vorhandene Nichtlinearitäten besser entdeckt werden können.

Das globale S-Optimale Design funktioniert ähnlich wie das S-Optimale Design für die Haupteinflussgrößen Drehzahl/Last. Kandidatenpunkte auf Projektionslinien werden hier jedoch nur lokal aus dem Kandidatenset entfernt, d.h. nur in aktuellen Drehzahl/Last - Betriebspunkt. Die Punkte werden wieder so ausgewählt, dass der neue Punkt maximale Distanz zu den bestehenden Punkten im Versuchsplan hat. Als Startpunkt wird der Punkt in der Mitte des Versuchsraums im aktuellen Drehzahl/Last - Betriebspunkt gewählt. Zusätzlich zur Distanz werden auch noch die drei oben Beschriebenen Vorgaben berücksichtigt, bevor ein Punkt zum Versuchsplan hinzugefügt wird. Vorteil dieses Designs ist der geringe Speicheraufwand und die einfache und schnelle Berechnung.

Beim globalen D-Optimalen Design hat der Benutzer die Möglichkeit zusätzlich die zu erwartende Modellordnung zu spezifizieren. Da das Design global optimiert wird, muss auch eine Modellordnung für die Haupteinflussgrößen angegeben werden. Hier sollten Modelle hoher Ordnung gewählt werden, wohingegen die Modellordnung für die restlichen Systemparameter niedriger sein können. Die minimal notwendige Anzahl von Punkten errechnet sich aus der Anzahl der Terme eines Polynomialmodells, welche durch die Modellordnung spezifiziert wurden.

Die Punkte werden nun so im Versuchsraum verteilt, dass einerseits die Determinante der Informationsmatrix det(M)=det(X'X) maximiert wird (Maximierung des eingeschlossenen Volumens) und andererseits die drei Bedingungen von oben erfüllt werden. Außerdem werden Punkte im Design nicht doppelt gemessen, um den Informationsgewinn zu maximieren. Wiederholpunkte müssen am Ende hinzugefügt werden. Problematisch bei diesem Design ist der hohe Rechen- und Speicheraufwand. Daher muss die Anzahl der Punkte im Kandidatenset gering gehalten werden.

Eine weitere Schwierigkeit liegt darin, ein geeignetes Startdesign zu finden. Hier werden die Punkte so ausgewählt, dass ihre Regressoren möglichst orthogonal zueinander sind und die Distanz zwischen ihnen maximal ist. Dadurch wird eine Verteilung der Punkte im Raum erreicht, die sehr hohe Ähnlichkeit mit einem D-Optimalen Design hat. Durch die Wahl des Startversuchsplans, werden die notwendigen Iterationsschritte verringert, um einen D-Optimalen Versuchsplan zu erstellen, was sich vor allem bei sehr hochdimensionalen Versuchsräumen positiv auswirken kann.

Ausgehend vom Startdesign werden Punkte zum Design hinzugefügt bis die gewünschte Punkteanzahl erreicht wird. Anschließend wird immer ein Punkt aus dem Kandidatenset mit einem Punkt aus dem Versuchsplan ausgetauscht, bis keine weitere Verbesserung der Determinante mehr erreicht werden kann. Auch während dieses Austauschverfahrens werden die drei Beschränkungen aus dem vorhergehenden Schritt überprüft und eingehalten.

**Patentansprüche**

1. Verfahren zur Vermessung eines nichtlinearen dynamischen realen Systems, beispielsweise einer Verbrennungskraftmaschine, eines Antriebsstranges oder eines Teilsystems davon, im Rahmen der Erstellung eines globalen Modells zumindest einer Ausgangsgröße des Systems für den gesamten Raum aller Betriebspunkte des Systems, umfassend die Vermessung des Systems für eine Teilmenge von Variationspunkten, welche Variationspunkte durch eine Menge von Parametern des Systems definiert sind,
wobei eine erste Teilmenge der Parameter auf Basis der die Haupteinflussgrößen auf die Ausgangsgröße des Systems beschreibenden Parameter ausgewählt wird und eine zweite Teilmenge auf Basis der die Nebeneinflussgrößen auf die Ausgangsgröße des Systems beschreibenden Parameter ausgewählt wird,
wobei in einem ersten Schritt zu messende Betriebspunkte für die erste Teilmenge der Parameter bestimmt werden
und in einem zweiten Schritt unter Verwendung der im ersten Schritt bestimmten Betriebspunkte und unter Hinzunahme der zweiten Teilmenge der Parameter die Teilmenge von Variationspunkten bestimmt wird,
wobei durch die Variationspunkte ein Versuchsplan definiert wird und das System gemäß diesem Versuchsplan vermessen wird,
**dadurch gekennzeichnet, dass** im zweiten Schritt ein über den ganzen durch die Parameter der ersten und zweiten Teilmenge gebildeten Eingangsraum optimierter Versuchsplan erstellt wird, wobei die minimale Anzahl von Variationspunkten pro im ersten Schritt bestimmten Betriebspunkt vorgegeben wird.

2. Verfahren nach Anspruch 1, **dadurch gekennzeichnet, dass** die Teilmengen der Parameter einander nicht schneiden.

3. Verfahren nach einem der Ansprüche 1 bis 2 **dadurch gekennzeichne,t dass** die Betriebs punkte des 1 Schrittes und die variationspunkte des 2 Schrittes gemäß einem globalen Verfahren zur statistischen Versuchsplanung ausgewählt werden.

4. Verfahren nach Anspruch 3, **dadurch gekennzeichnet, dass** für zumindest die erste Teilmenge ein den Versuchsraum gleichmäßig füllendes Verfahren zur statistischen Versuchsplanung zum Einsatz kommt.

5. Verfahren nach einem der Ansprüche 1 bis 4, **dadurch gekennzeichnet, dass** über eine Sensitivitätsanalyse die die Haupteinflussgrößen beschreibenden Parameter automatisch ermittelt werden.

6. Verfahren nach einem der Ansprüche 1 bis 5, **dadurch gekennzeichnet, dass** die Auswahl der Teilmengen der Parameter für die einzelnen Stufen automatisch vorgenommen wird, beispielsweise über eine Clusteranalyse.

**Claims**

1. Method for measuring a non-linear dynamic real system, for example, of an internal combustion engine, of a drive train or of a partial system thereof, within the scope of the production of a global model at least of one output variable of the system for the total area of all operating points of the system, comprising the measurement of the system for a subset of variation points, which variation points are defined by a set of parameters of the system,
wherein a first subset of the parameters is selected on the basis of the parameters describing the main influencing variables on the output variable of the system and a second subset is selected on the basis of the parameters describing the secondary influencing variables on the output variable of the system,
wherein in a first step operating points to be measured for the first subset of the parameters are determined
and in a second step, using the operating points determined in the first step and drawing on the second subset of the parameters, the subset of variation points is determined,
wherein through the variation points a test plan is defined and the system is measured according to this test plan,
**characterized in that** in the second step a test plan optimized over the entire input area formed by the parameters of the first and second subset is compiled, wherein the minimal number of variation points per operating point determined in the first step is specified.

2. The method according to claim 1, **characterized in that** the subsets of the parameters do not intersect each other.

3. The method according to one of claims 1 through 2, **characterized in that** the operating points of the first step and the variation points of the second step are selected based on a global method for statistical test planning.

4. The method according to claim 3, **characterized in that** a method for statistical test planning uniformly filling the test space is employed for at least the first subset.

5. The method according to one of claims 1 through 4, **characterized in that** the parameters describing the main influencing variables are determined automatically by means of a sensitivity analysis.

6. The method according to one of claims 1 through 5, **characterized in that** the selection of the subsets of the parameters is carried out automatically for the individual steps, by means of a cluster analysis, for example.

## Revendications

1. - Procédé de mesure d'un système dynamique non linéaire réel, par exemple d'une machine à combustion interne, d'une chaîne cinématique ou d'un sous-système de ceux-ci, dans le cadre de l'établissement d'un modèle global d'au moins une grandeur de sortie du système pour la totalité de l'espace composé de tous les points de fonctionnement du système, comprenant la mesure du système pour une quantité partielle de points de variation, ces points de variation étant définis par une quantité de paramètres du système,

   dans lequel une première quantité partielle des paramètres est sélectionnée sur la base des paramètres qui décrivent les grandeurs d'influence principales qui affectent la grandeur de sortie du système et une deuxième quantité partielle est sélectionnée sur la base des paramètres qui décrivent les grandeurs d'influence secondaires qui affectent la grandeur de sortie du système ;

   dans lequel des points de fonctionnement à mesurer pour la première quantité partielle des paramètres sont déterminés dans une première étape et

   la quantité partielle des points de variation est déterminée dans une deuxième étape en utilisant les points de fonctionnement déterminés dans la première étape et en se fondant sur la deuxième quantité partielle des paramètres ;

dans lequel les points de variation définissent un plan expérimental et le système est mesuré d'après ce plan expérimental ;

**caractérisé par le fait que**, dans la deuxième étape, est établi un plan expérimental optimisé sur la totalité de l'espace d'entrée formé par les paramètres de la première et de la deuxième quantité partielle, le nombre minimal des points de variation étant prescrit pour chaque point de fonctionnement déterminé dans la première étape.

2. - Procédé selon la revendication 1, **caractérisé par le fait que** les quantités partielles des paramètres ne se coupent pas.

3. - Procédé selon l'une des revendications 1 et 2, **caractérisé par le fait que** les points de fonctionnement de la première étape et les points de variation de la deuxième étape sont sélectionnés selon un procédé global de plan expérimental statistique.

4. - Procédé selon la revendication 3, **caractérisé par le fait qu'**au moins pour la première quantité partielle, il est fait usage d'un procédé de plan expérimental statistique remplissant régulièrement l'espace expérimental.

5. - Procédé selon l'une des revendications 1 à 4, **caractérisé par le fait qu'**à l'aide d'une analyse de sensibilité, les paramètres qui décrivent les grandeurs d'influence principales sont déterminés automatiquement.

6. - Procédé selon l'une des revendications 1 à 5, **caractérisé par le fait que** la sélection des quantités partielles des paramètres pour les différentes étapes est réalisée automatiquement, par exemple à l'aide d'une analyse par partitionnement de données.

FIG. 1

FIG. 2

FIG. 3

o gültiger Kandidat

⊠ ungültiger Kandidat

Φ gestrichener Kandidat

⊛ ausgewählter Kandidat

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03087957 A

**In der Beschreibung aufgeführte Nicht-Patentliteratur**

- **A. Bittermann ; E. Kranawetter ; J. Krenn ; B. Ladein ; T. Ebner ; H. Altenstrasser ; H.M. Koegeler ; K. Gschweitl.** Emissionsauslegung des dieselmotorischen Fahrzeugantriebs mittels DoE- und Simulationsrechnung. *MTZ,* 2004, 65, 6
- **D. Montgomery.** Design and Analysis of Experiments. John Wiley & Sons, Inc, 2001
- **W. Kleppmann.** Taschenbuch der Versuchplanung. Hanser Verlag, 2003
- **T. Santner ; B.Willimans ; W. Notz.** The Design and Analysis of Computer Experiments. Springer, 2003
- **AYEB M et al.** Robust Identification of Nonlinear Dynamic Systems Using Design of Experiment. *INTELLIGENT CONTROL, 2006. IEEE INTERNATIONAL SYMPOSIUM ON,* 04. Oktober 2000, 2321-2326
- **PRONZATO et al.** Optimal experimental design and some related control problems. *AUTOMATICA, PERGAMON,* 11. Januar 2008, vol. 44 (2), 303-325
- **HANS BANDEMER et al.** Optimale Versuchsplanung. VERLAG HARRI DEUTSCH, 1976
- Kapitel 6.2. Integration der D-Optimalität in neuronale Modellierungsverfahren. **AYEB M et al.** DESIGN OF EXPERIMENTS (DOE) IN DER MOTORENENTWICKLUNG : PRAKTISCHE ANWENDUNGEN IN DER AUTOMOBIL- UND ZULIEFERERINDUSTRIE. EXPERT VERLAG, 01. Januar 2003, 185-194
- **Chiang C.J. ; A.G. Stefanopoulou.** Sensitivity Analysis of Combustion Timing and Duration of Homogeneous Charge Compression Ignition (HCCI) Engines. *Proceedings of ACC 2006,* Juni 2006
- **Karsten Röpke et al.** Design of Experiments in Engine Developement. Expert Verlag, 2007, vol. III
- **T. Hastie ; R. Tibishirani ; J. Friedman.** The Elements of Statistical Learning: Data Mining, Inference, and Prediction. Springer, 30. Juli 2003